# EUROPÄISCHE PATENTANMELDUNG

(11) **EP 1 048 582 A1**
(43) Veröffentlichungstag der Anmeldung: **02.11.2000**
(21) Anmeldenummer: 99810831.0
(22) Anmeldetag: 17.09.1999
(51) Int. Cl.: B65D 35/44, B65D 47/08

(54) **Kunststofftube mit scharnierend daran befestigtem Verschluss und Verfahren zu derenHerstellung**

(30) Priorität: 29.04.1999 CH 990793; 23.07.1999 CH 991358
(71) Anmelder: Createchnic AG, 8309 Nürensdorf (CH)
(72) Erfinder: Seelhofer, Fritz, 8315 Lindau (CH)
(74) Vertreter: Felber, Josef

(57) **Zusammenfassung**

Die Kunststofftube weist einen Tubenkörper (1) mit Tubenschulter (8) und Tubenöffnung (2), sowie einen zugehörigen Verschluss (7) auf, wobei diese Elemente einstückig zusammengehörig gespritzt sind und das Scharnier aus wenigstens einem Filmscharnier (11) sowie wenigstens einem als Zugfeder ausgebildeten Spannband (19,20) besteht. Infolge der Spannbänder (19,20) wird der Verschluss (7) bei geöffneter Stellung weit von der Schliessstellung weggeschwenkt gehalten, sodass er beim Herausdrücken von Tubeninhalt nicht stört. Die Tube kann daher ohne weiteres einhändig bedient werden. Diese Kunststofftube weist nebst der für die Bedienung vorteilhaften Konstruktion des Verschlusses (7) auch den sehr grossen Vorteil auf, dass sie in einem Arbeitsvorgang und zusammenhängend als ein einziges Stück gespritzt werden kann. Hierzu wird die Tube mittels eines zweiteiligen Spritzwerkzeuges gespritzt, und zwar in einem Zustand, bei dem der Verschluss 7 völlig geöffnet ist und also um 180° vom geschlossenen Zustand aufgeschwenkt ist. Diese Anspritzpunkte (27,28) befinden sich verteilt um den Umfang des Tubenkörpers, nahe der Tubenschulter (8). Der gesamte Verschlussteil wird beim Spritzen einzig über das Scharnier mit Kunststoff versorgt.

## Beschreibung

Kunststofftuben als Verpackung und Spender für pastöse Erzeugnisse bestehen in der Regel aus einem Tubenkörper sowie dem dazugehörigen Verschluss, welcher durch einen separaten Verschlussdeckel oder eine Verschlusskappe gebildet wird. Die einzelnen Teile werden durch Kunststoffspritzen nach bekannter Art hergestellt. Beim Verschluss kann es sich um einen Drehverschluss mit Gewinde, oder um einen Schnappverschluss handeln. Manchmal ist der Verschluss über ein Sicherungsband mit dem Tubenkörper verbunden, damit er nicht verlorengehen kann. Es sind auch Kunststofftuben bekannt, deren Schnappverschluss scharnierend mit dem Tubenkörper verbunden ist und dabei so konstruiert ist, dass er durch Aufdrücken des Verschlusses auf die Tubenöffnung in die Schliesslage einschnappt und danach die Tube dicht verschliesst. Der Verschluss weist in diesem Fall ein Filmscharnier zwischen dem Verschluss und dem Tubenkörper auf, oder ganz allgemein eine solche Scharnierkonstruktion, welche beim Öffnen und Schliessen des Verschlusses eine gewisse Deformation der Verschlusswandung sowie der Wandung der Tubenöffnung oder des Tubenkörpers erzwingt, sodass der Verschluss unter zunehmender Deformation über einen Totpunkt von der Tubenöffnung wegschwenkbar ist, wobei nach dessen Überwindung die Deformation wieder abnimmt. Dadurch wird der Verschluss nach Wegschwenken über den Totpunkt hinaus jenseits dieses Totpunktes gehalten. Diesen bisherigen Verschlüssen haftet jedoch der Mangel an, dass die Verschlusskappen oder Verschlussdeckel in der geöffneten Lage nicht von selbst hinreichend von der Tubenöffnung wegschwenken, um den Bereich vor der Tubenöffnung für das Herausdrücken des Tubeninhaltes freizugeben. Oftmals schwenken sie kaum 90° von der Schliesslage weg und behindern deshalb das Aufbringen des Tubeninhaltes auf eine Fläche. Der Verschluss muss dann von Hand noch weiter von der Tubenöffnung weggeschwenkt und in der weggeschwenkten Position gehalten werden, damit der Tubeninhalt ungehindert ausgedrückt werden kann. Will man zum Beispiel Zahnpasta auf die Zahnbürste drücken, so fehlt zum Halten des Verschlusses eine Hand. Auch im Fall einer Leimtube möchte man ja mit bloss einer Hand die Tube bedienen und mit ihr ausschliesslich dosiert den Tubenkörper zusammendrücken, während man mit der anderen Hand ein Werkstück hält, auf das man den Leim applizieren will. Zum gänzlichen Offenhalten des Verschlusses fehlt auch da die dritte Hand.

Es ist daher die Aufgabe der vorliegenden Erfindung, eine Kunststofftube mit scharnierend daran befestigtem Verschluss zu schaffen, der in Offenstellung mindestens um 110° von der Schliessstellung weggeschwenkt gehalten wird, und beim Zuschwenken maximal 25° vor der Schliessstellung von selbst gehalten wird, sowie durch Aufdrücken auf die Tubenöffnung in die Schliessstellung einschnappt und in dieser die Tube dichtend verschliesst. Weiter es ist eine Aufgabe dieser Erfindung, ein Verfahren zur Herstellung einer solchen Kunststofftube anzugeben.

Die erste Aufgabe wird gelöst von einer Kunststofftube mit scharnierend daran befestigtem Verschluss, dadurch gekennzeichnet, dass der Tubenkörper, die Tubenöffnung sowie der zugehörige Verschluss einstückig zusammengehörig gespritzt sind und das Scharnier aus wenigstens einem Filmscharnier sowie wenigstens einem als Zugfeder ausgebildeten Spannband besteht.

Die zweite Aufgabe wird gelöst von einem Verfahren zum Herstellen einer Kunststofftube mit scharnierend und einstückig daran befestigtem Verschluss, das sich dadurch auszeichnet, dass die Tube mit einem zweiteiligen Werkzeug gespritzt wird, wobei die Tube in einer Stellung mit um 180° geöffnetem Verschluss gespritzt wird, und der Kunststoff über wenigstens zwei Anspritzpunkte eingespritzt wird, die um den Umfang der Tubenwand verteilt nahe der Tubenschulter angeordnet sind, sodass der Verschluss über das Scharnier mit Kunststoff befüllt wird.

Eine vorteilhafte Ausführung der Erfindung ist in den Zeichnungen dargestellt und wird nachfolgend im einzelnen beschrieben und ihre Funktionsweise wird erklärt.

Es zeigt:
- Figur 1:: Die Kunststofftube mit dem Verschluss in Offenstellung in einer perspektivischen Darstellung;
- Figur 2:: Die Kunststofftube mit dem Verschluss in Offenstellung von oben gesehen;
- Figur 3:: Die Kunststofftube mit dem Verschluss in der Stellung vor dessem Zudrücken zum Verschliessen der Tube;
- Figur 4:: Die Kunststofftube mit dem Verschluss in Schliessstellung und verschweisstem Tubenkörperende.

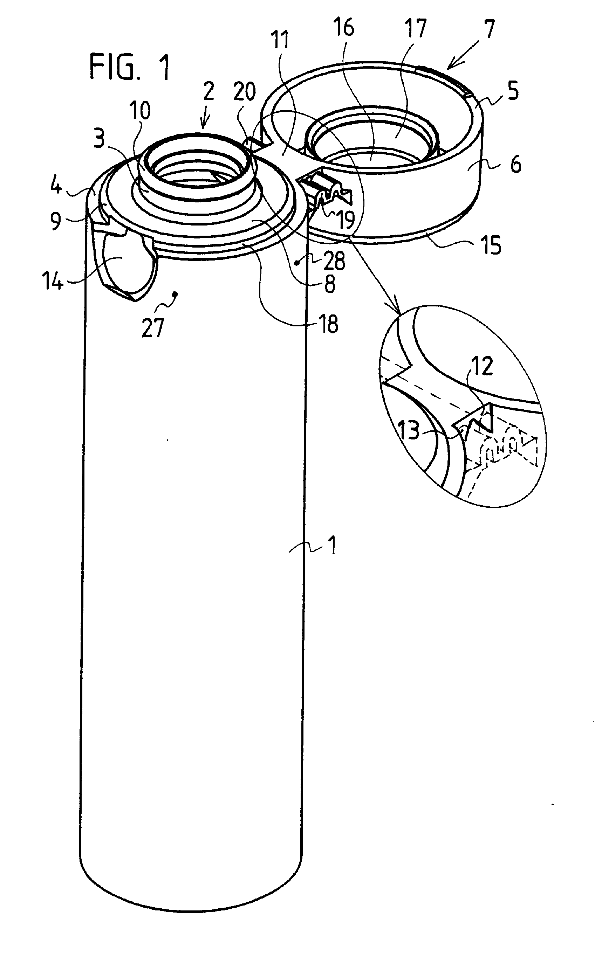

Die Figur 1 zeigt die Kunststofftube zunächst mit dem Verschluss in Offenstellung. Der Tubenkörper 1 wird von einem elastisch deformierbaren Kunststoffrohr mit unten offenem Ende gebildet. Auf der oberen Seite ist der Tubenkörper so geformt, dass er eine Tubenöffnung 2 mit einem Kragen 3 bildet. Der obere Rand des Tubenkörpers 1 bildet eine Stufe 4, auf welche der untere Rand 5 der Wandung 6 des Verschlusses 7 in Schliessstellung zu liegen kommt. Über der Stufe 4 ist der Tubenkörper 1 mit einer ebenen Abschlussfläche 8 verschlossen, welche die Tubenschulter 8 bildet, wobei deren äusserer Rand 9 etwas abgeschrägt ist. Aus dieser Tubenschulter 8 ragt der Kragen 3, welcher einen aussen leicht verdickten oberen Rand 10 aufweist. Im Innern des Kragens 3 kann dieser eine durchgehende Abschlussfläche aufweisen, welche parallel zur äusseren Abschlussfläche 8 und auf einem erhöhten Niveau verläuft, oder sogar in derselben Ebene wie die Tubenschulter 8. Diese innere Abschlussfläche, welche in der hier gezeigten Version allerdings nicht vorhanden ist, weist dann je nach der Beschaffenheit des Erzeugnisses, das die Tube aufnehmen soll, ein oder mehrere Löcher einer gewünschen Dimension auf. In der hier dargestellten Version allerdings bleibt der Bereich im Innern des Kragens 3 völlig frei. Die Tube hat dann eine entsprechend grosse Öffnung 2. Der Tubenkörper 1 weist auf der dem Scharnier 11 gegenüberliegenden Seite eine Ausnehmung 14 von der Tiefe der Stufe 4 auf, welche bei geschlossenem und eingeschnapptem Verschluss 7 als Aufnahmebereich für eine Fingerkuppe dient, damit der Verschluss 7 leicht durch Aufwärtsschieben eines Fingers längs des Tubenkörpers 1 zu öffnen ist. Der Verschluss 7 ist nun über ein Filmscharnier 11 mit dem Tubenkörper 1 verbunden, und zwar so, dass die obere Abschlussebene des Filmscharniers 11 bündig mit der Fläche der Stufe 4 am Tubenkörper 1 abschliesst. In der zugehörigen vergrösserten Ausschnittszeichnung ist das Spannband weggelassen und man sieht, wie das Filmscharnier konstruiert ist. Es bildet zwei an seinen Längsrändern verbundene Dreiecksprofile 12,13. Der Bereich längs der gemeinsamen Längsränder bildet dabei die Scharnierachse. Der Verschluss 7 selbst bildet eine zylinderförmige Kappe mit abgerundetem Rand 15. Auf der Innenseite des Kappendeckels 16 ist eine Ringwand 17 an diese angeformt, die so dimensioniert ist, dass sie knapp über den verdickten Rand 10 des Kragens 3 stülpbar ist. In Schliess-Stellung passt die Wandung der Verschlusskappe 6 exakt in die Stufe 4 am Tubenkörper 1 und ihre Innenseite umschliesst satt die innere, senkrechtstehende Ringfläche 18 der Stufe 4. Durch dieses satte Zusammenpassen von Ringwand 17 und Kragen 3 einerseits und Kappenwandung 6 mit der Stufe 4 and- rerseits wird eine Schnapp-Wirkung erzielt, welche den Verschluss in diese Schliessstellung einschnappen lässt, sodass er in dieser Schliessstellung hinreichend sicher verschlossen gehalten ist. Einen wesentlichen Bestandteil der Erfindung bilden die Spannbänder 19,20. Es sind nämlich die Spannbänder 19,20, welche sicherstellen, dass der Verschluss 7 in Offenstellung hinreichend weit vom Tubenkörper 1 weggeschwenkt gehalten wird, und umgekehrt beim Schliessen, also nach dem Zuschwenken des Verschlusses 7 in die Lage, aus welcher er durch Einschnappen auf die Tubenöffnung gedrückt werden kann, ebenfalls von selbst gehalten wird. Zu diesem Zweck sind diese Spannbänder 19,20 als Formstrukturen gespritzt, sodass diese dehnbare Materialgebilde sind, die als Zugfedern wirken. Der gespritzte Kunststoff selbst ist ja nicht elastisch dehnbar, sondern nur elastisch biegbar oder verwindbar. Diese Eigenschaft wird dadurch genutzt, dass den Spannbändern 19,20 eine solche Form gegeben wird, welche bei Anlegen einer Zugkraft an die Spannbänder 19,20 deren Material durch elastische Biege- und/oder Verwindungskräfte verformt. Im gezeigten Beispiel ist das dadurch realisiert, dass die Spannbänder 19,20 schlangenlinienförmig gestaltet sind, sodass die Krümmungen bei Anlegen einer Zugkraft an die Spannbänder 19,20 infolge elastischer Materialbiegung in ihren Krümmungsradien erweitert werden, und die an die Krümmungen anschliessenden Schenkel daher gespreizt werden, sodass das Spannband ingesamt elastisch gedehnt wird. Selbstverständlich können solche dehnbaren Materialgebilde auch ganz anders geformt sein. Denkbar sind zickzackförmige Spannbänder, oder solche, die aus aneinandergereihten, zusammenhängenden Buchstaben, zum Beispiel aus mehreren X oder O bestehen, sodass diese auf Zug durch die elastische Biegeverformbarkeit des Kunststoffs dehnbar sind und als Zugfedern wirken. Die Zugkräfte werden am Verschluss dadurch aufgebaut, dass die Schwenkachse des Verschlusses 7 ja durch das Filmscharnier 11 definiert ist, während die Spannbänder 19,20 je zwischen zwei Angriffspunkten an Tubenkörper 1 und Verschluss 7 wirken, welche nicht mit der Schwenkachse des Verschlusses 7 zusammenfallen. Infolge der so gewählten Geometrie sind die Spannbänder 19,20 in der gezeigten Offenstellung des Verschlusses 7 gänzlich entspannt. Die Länge der Verbindungslinie zwischen ihren Angriffspunkten ist also in dieser Stellung minimal. Wird der Verschluss 7 zugeschwenkt, so entfernen sich die Angriffspunkte zunehmend voneinander und dehnen dabei die Spannbänder 19,20 elastisch, bis in einem mittleren Schwenkbereich, wo der Verschluss 7 etwa im rechten Winkel zum Tubenkörper steht, die Verbindungslinien der Angriffspunkte ihre maximalen Längen erreichen. Diese Stellung bildet einen Totpunkt, denn bei weiterem Zuschwenken wird der Abstand zwischen den Angriffspunkten der Spannbänder 19,20 wieder zunehmend verkürzt. Zwischen der Offenstellung des Verschlusses 7 und diesem Totpunkt entwickeln die Spannbänder daher eine öffnende Schwenkkraft auf den Verschluss 7, und zwischen der Schliessstellung des Verschlusses 7 und dem Totpunkt eine schliessende Schwenkkraft. Das Öffnen wie auch das Schliessen des Verschlusses 7 wird dadurch sehr erleichtert. Zum Öffnen nämlich braucht man bloss mit einem Finger den Verschluss 7 aus der eingeschnappten Schliess-stellung zu heben, indem man eine Fingerkuppe in die Ausnehmung 14 legt und den Rand des Verschlusses 7 nach oben schiebt. Der Verschluss 7 springt dadurch auf und ruht hernach in einer um etwa 25° aufgeschwenkten Stellung. Aus dieser Stellung wird er von Hand unter zunehmender elastischer Spannung der Spannbänder 19,20 über den Totpunkt geschwenkt, wonach er kraft der nun elastisch gespannten Spannbänder 19,20 weiter aufgeschwenkt wird, bis er um insgesamt wenigstens 140° aufgeschwenkt verharrt. In dieser geöffneten Stellung ist er somit hinreichend von der Tubenöffnung 2 weggeschwenkt, sodass er beim Auspressen von Tubeninhalt nicht mehr stört und den hierzu nötigen Bereich freilässt. Die Tube kann daher ohne weiteres einhändig bedient werden!

Die Tube wird im Zustand wie in Figur 1 gezeigt mittels eines zweiteiligen Spritzwerkzeuges aus Kunststoff gespritzt. Der Verschluss 7 ist dabei völlig geöffnet und befindet sich um 180° vom geschlossenen Zustand aufgeschwenkt. In dieser Lage kann das zweiteilige Werkzeug in der Längsachse der Tube zusammenfahren und anschliessend wieder öffnen. Das eine Werkzeugteil, welches im Bild von oben nach unten zuschliesst, bildet also die Negativform der Aussenseite der Tubenschulter 8, des Tubenkragens 3 und der Tubenöffnung 2, und andrerseits die Negativform der Oberseite des Scharnieres 11, sowie die Negativform der Innenseite des Verschlusses 7. Zum Entformen des Verschlusses dienen Ausstösser an diesem in bezug auf die Figur oberen Wergzeugteil, die verteilt um den Umfang des Verschlusses angeordnet sind und in den Bereich zwischen der Wandung 6 und der Ringwand 17 vorstossen. Das zweite, in bezug auf die Figur untere Werkzeugteil fährt zum Zuschliessen der Spritzform von unten hoch und bildet die Negativform des Tubenkörpers 1 sowie der Verschlussaussenseite. Selbstverständlich kann das eine Werkzeugteil stationär sein, sodass also zum Öffnen und Schliessen des Werkzeuges nur ein einziges Werkzeugteil auf und ab bewegt wird. Am hier gezeigten Beispiel gibt es vier Anspritzpunkte zum Einspritzen des Kunststoffes in das geschlossene Werkzeug. Diese Anspritzpunkte 27,28 befinden sich hier verteilt um den Umfang des Tubenkörpers, nahe der Tubenschulter. Auf der hinteren, hier nicht sichtbaren Seite des Tubenkörpers 1 sind zwei weitere, identisch angeordnete Anspritzpunkte vorhanden. Das Einspritzen des Kunststoffs erfolgt also durch das eine, hier untere Werkzeugteil. Der gesamte Verschlussteil wird einzig über das Scharnier mit Kunststoff versorgt! Hierzu gelangt der an den Punkten 27,28 eingespritzte Kunststoff über die Tubenschulter durch das Scharnier 11, welches nach erfolgtem Befüllen des Hohlraums für den Verschluss 7 zusammen mit den Spannbändern 19,20 entsteht. Etwa gleichzeitig entstehen der Tubenkragen 3 und die Tubenschulter 8, sowie gegen unten hin der gesamte Tubenkörper 1. Das ganze Spritzen ist auch mit bloss zwei oder drei Anspritzpunkten möglich, die um den Umfang des Tubenkörpers 1 herum verteilt nahe der Tubenschulter 8 angeordnet sind.

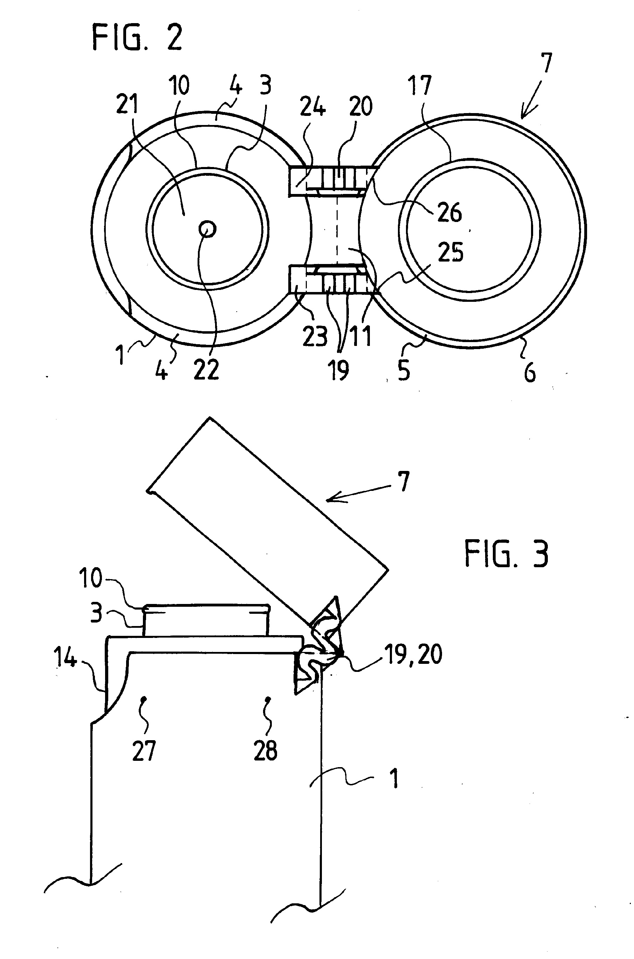

Zum besseren Verständnis der Tube, ihres Verschlusses 7 und des beschriebenen Scharniers 11 mit den Spannbändern 19,20 ist die Tube wie in Figur 1 gezeigt in der Figur 2 von oben gesehen dargestellt. Man sieht sehr schön die Ausnehmung 14 und die Stufe 4 am Tubenkörper 1, den Kragen 3 mit nach aussen verdicktem Rand 10, sowie hier in Abweichung zu Figur 1 eine Abschlussfläche 21 im Innern des Kragens 3, welche ein zentrales Dosierloch 22 aufweist. Das Filmscharnier 11 liegt mit seiner Oberseite in derselben Ebene wie die Stufe 4 und ist auch bündig mit der Unterseite 5 des Randes der Verschlusskappen-Wandung 3. Die Spannbänder 19,20 hingegen sind auf einem tieferen Niveau angeordnet, um eben beim Schwenken des Verschlusses 7 deren Längenänderung und somit elastische Dehnung zu erzwingen. Hierzu weist der Tupenkörper 1 beidseits des Filmscharniers 11 eine Ausnehmung 23,24 auf, sodass je ein vertiefter Vorsprung gebildet ist. Die Vorsprungsflächen sind gegen aussen durch angeformte Dreiecksprofile verlängert, deren äusserer Rand ein Filmscharnier bildet. Auf der anderen Seite des Filmscharniers 11 sind die schlangenlinienförmigen Spannbänder 19,20 angeformt und an der Verschlusskappe in gleicher Weise über ein Filmscharnier mit dieser verbunden. Die Verschlusskappenwand weist hierzu an diesen Stellen eine Ausnehmung 25,26 auf, entsprechend der Tiefen der Ausnehmungen 23,24 am Tubenkörper 1. Diese Ausnehmungen 23-26 bilden den Raum, welcher von den Spannbändern 19,20 in Schliessstellung des Verschlusses 7 eingenommen wird. Die Spannbänder 19,20 sind also zwischen zwei Filmscharnieren angeordnet, und verbinden dadurch die beiden Angriffspunkte am Tubenkörper 1 und am Verschluss 7 aufgrund der gegebenen Verschwenkbarkeit der Filmscharniere stets in der direkten und somit kürzesten Verbindungslinie.

Die Figur 3 zeigt die Kunststofftube mit dem Verschluss 7 in der Stellung vor dessem Zudrücken zum Einschnappen am Tubenkörper 1. Man sieht den Kragen 3 mit dem oben auf der Aussenseite verdickten Rand 10, der zum Einschnappen der zugehörigen Ringwand im Innern der Verschlusskappe dient. In dieser Lage des Verschlusses 7 sind die Spannbänder 19,20 nahezu entspannt. Sie werden durch das endgültige Zudrücken des Verschlusses 7 nurmehr wenig verkürzt.

Es versteht sich, dass diese Kunststofftube und namentlich ihre Scharnierkonstruktion auch in anderen Varianten hergestellt werden kann. Namentlich kann zum Beispiel für einen schwereren Verschlussdeckel eine Konstruktion in Frage kommen, wo man anstelle eines einzelnen Filmscharniers aus Stabilitätsgründen zwei Filmscharniere dort anordnet, wo in der oben beschriebenen Ausführung die Spannbänder liegen, und umgekehrt dort, wo das Filmscharnier angeordnet ist, nämlich in der Mitte, ein einzelnes Spannband. Weiter sind Versionen denkbar, wo man zwei Filmscharniere anordnet und zum Beispiel drei Spannbänder, nämlich eines zwischen den Filmscharnieren und je eines ausserhalb der Filmscharniere. Eine solche Lösung eignet sich dann, wenn besonders grosse Schliess-Kräfte gewünscht werden.

Diese Kunststofftube weist nebst der für die Bedienung vorteilhaften Konstruktion des Verschlusses auch den sehr grossen Vorteil auf, dass sie in einem Arbeitsvorgang und zusammenhängend als ein einziges Stück gespritzt werden kann. Das Spritzen erfolgt in der vollständig geöffneten Stellung des Verschlusses 7 wie in den Figuren 1 und 2 gezeigt. In dieser Stellung sind nämlich die Spannbänder 19,20 vollständig entspannt. Ausserdem sind in dieser Stellung am Spritzformteil keine hintergreifenden Flächen vorhanden, sodass es einfach entformbar ist. Die Verdickung 10 am Kragenrand 3 ist so gering dimensioniert, dass sie noch ohne Schieber entformbar ist. Werden also die Spannbänder 19,20 in dieser Stellung gespritzt, so entwickeln sie im wesentlichen aufgrund der Biegeelastizität des Kunststoffs in jedem aus dieser Länge gestreckten Zustand eine Zugkraft. Und in jeder Schwenkstellung zwischen der Schliessstellung und der offenen Stellung des Verschlusses sind die Spannbänder im Vergleich zu ihrem entspannten Zustand mehr oder weniger gestreckt.

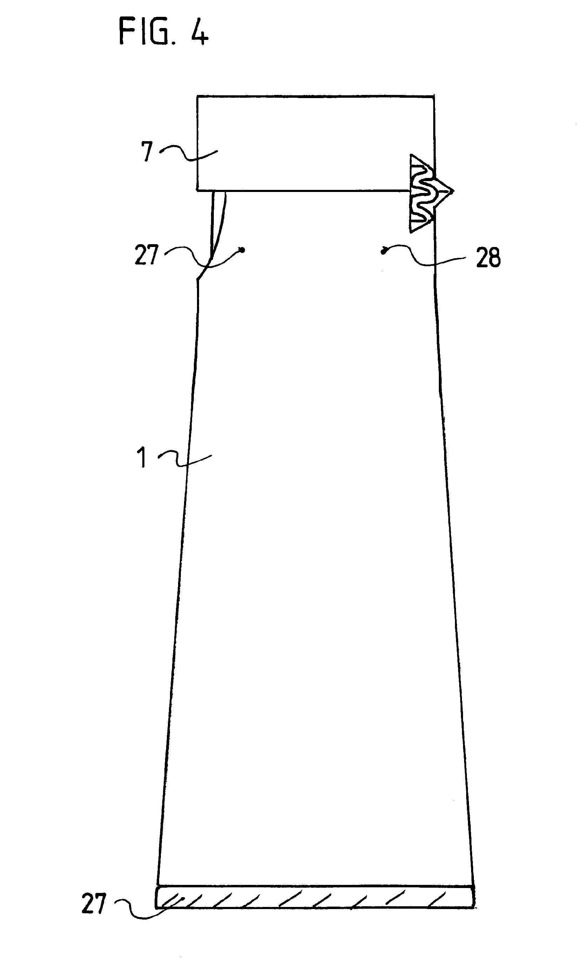

In Figur 4 ist die Kunststofftube noch mit dem Verschluss 7 in Schliess-stellung und mit verschweisstem Tubenkörperende 27 gezeigt. Die Tube wird ja mit unten offenem Tubenkörper 1 gespritzt. An der fertig gespritzten Tube wird dann der Verschluss 7 dicht verschlossen und hernach wird die Tube für das maschinelle Befüllen gestürzt. Nach dem Befüllen wird das Ende des Tubenkörpers 1 mittels einer Quetschnaht 27 zugeschweisst. Es handelt sich also um eine Einwegtube, die äussert kostengünstig herstellbar ist und zudem einen bisher nicht dagewesenen Bedienungskomfort aufweist.

## Patentansprüche

1. Kunststofftube mit scharnierend daran befestigtem Verschluss (7), dadurch gekennzeichnet, dass der Tubenkörper (1), die Tubenschulter (8) und die Tubenöffnung sowie der zugehörige Verschluss (7) einstückig zusammengehörig gespritzt sind und das Scharnier aus wenigstens einem Filmscharnier (11) sowie wenigstens einem als Zugfeder ausgebildeten Spannband (19,20) besteht.

2. Kunststofftube nach Patentanspruch 1, dadurch gekennzeichnet, dass jedes Spannband (19,20) als Zugfeder ausgebildet ist, indem es aus einem infolge seiner Formstruktur elastisch dehnbaren Materialgebilde geformt ist.

3. Kunststofftube nach einem der vorhergehenden Ansprüche, dadurch gekennzeichnet, dass der Verschluss (7) in Offenstellung mindestens um 110° von der Schliessstellung weggeschwenkt gehalten ist, und beim Zuschwenken maximal 25° vor der Schliessstellung von selbst gehalten ist, sowie durch Aufdrücken auf die Tubenöffnung in die Schliessstellung einschnappt und in dieser Stellung die Tube dichtend verschliesst.

4. Kunststofftube nach einem der vorhergehenden Ansprüche, dadurch gekennzeichnet, dass die Scharnierkonstruktion ein zentrales Filmscharnier (11) einschliesst, und beidseits des Filmscharniers (11) je ein Spannband (19,20) an Angriffspunkten angeordnet ist, die in um 180° geöffneter Stellung des Verschlusses in bezug auf die Filmscharnierachse nach unten und hinten versetzt sind, wobei die Spannbänder (19,20) in dieser Stellung entspannt sind.

5. Kunststofftube nach einem der vorhergehenden Ansprüche, dadurch gekennzeichnet, dass die Tubenschulter (8) am oberen Ende des Tubenkörpers (1) so geformt ist, dass sie eine Tubenöffnung (2) mit einem Kragen (3) mit nach aussen verdicktem Rand (10) bildet, über den eine im Innern des Verschlusses (7) angeordnete Ringwand (17) stülpbar ist, und dass der obere Rand des Tubenkörpers (1) eine Stufe (4) bildet, wobei der untere Rand (5) der Wandung (6) des Verschlusses (7) in Schliessstellung exakt in die Stufe (4) am Tubenkörper (1) passt und die Innenseite der Wandung (6) in Schliessstellung die innere, senkrecht stehende Ringfläche (18) der Stufe (4) satt umschliesst.

6. Kunststofftube nach einem der vorhergehenden Ansprüche, dadurch gekennzeichnet, dass das Filmscharnier (11) zwei an seinen Längsrändern verbundene Dreiecksprofile (12,13) bildet, wobei der Bereich längs der gemeinsamen Längsränder die Scharnierachse bildet.

7. Kunststofftube nach einem der vorhergehenden Ansprüche, dadurch gekennzeichnet, dass die Spannbänder (19,20) schlangenlinienförmig gestaltet sind, sodass die Krümmungen bei Anlegen einer Zugkraft an die Spannbänder (19,20) infolge elastischer Materialbiegung in ihren Krümmungsradien erweitert werden, und die an die Krümmungen anschliessenden Schenkel daher gespreizt werden, sodass das Spannband (19,20) insgesamt elastisch dehnbar ist.

8. Kunststofftube nach einem der vorhergehenden Ansprüche, dadurch gekennzeichnet, dass die Zugkräfte der Spannbänder (10,20) dadurch aufbaubar sind, dass die Schwenkachse des Verschlusses (7) durch das Filmscharnier (11) definiert ist, während die Spannbänder (19,20) je zwischen zwei Angriffspunkten an Tubenkörper (1) und Verschluss (7) wirken, welche nicht mit der Schwenkachse zusammenfallen.

9. Kunststofftube nach einem der vorhergehenden Ansprüche, dadurch gekennzeichnet, dass zwei voneinander beabstandete Filmscharniere den Verschluss halten, und in der Mitte ein einzelnes Spannband angeordnet ist.

10. Kunststofftube nach einem der vorhergehenden Ansprüche, dadurch gekennzeichnet, dass zwei voneinander beabstandete Filmscharniere den Verschluss halten, und in der Mitte ein Spannband, sowie ausserhalb der beiden Filmscharniere je ein weiteres Spannband angeordnet ist.

11. Verfahren zum Herstellen einer Kunststofftube mit scharnierend und einstückig daran befestigtem Verschluss, dadurch gekennzeichnet, dass die Tube mit einem zweiteiligen Werkzeug gespritzt wird, wobei die Tube in einer Stellung mit um 180° geöffnetem Verschluss (7) gespritzt wird, und der Kunststoff über wenigstens zwei Anspritzpunkte (27,28) eingespritzt wird, die um den Umfang der Tubenwand verteilt nahe der Tubenschulter (8) angeordnet sind, sodass der Verschluss über das Scharnier mit Kunststoff befüllt wird.

12. Verfahren nach Anspruch 11, dadurch gekennzeichnet, dass der Kunststoff über drei oder vier Anspritzpunkte (27,28) eingespritzt wird, die um den Umfang der Tubenwand verteilt nahe der Tubenschulter (8) angeordnet sind.
